# EUROPEAN PATENT APPLICATION

(11) **EP 4 667 973 A1**
(43) Date of publication of application: **24.12.2025**
(21) Application number: 24217054.6
(22) Date of filing: 03.12.2024
(51) Int. Cl.: G01S 17/06, G01S 17/931

(54) **APPARATUS FOR CONTROLLING VEHICLE AND METHOD THEREOF**

(30) Priority: 21.06.2024 KR 20240081428
(71) Applicant: Hyundai Motor Company, Seoul 06797 (KR); Kia Corporation, Seocho-gu Seoul 06797 (KR)
(72) Inventor: BAEG, Ju Heon, 18280 Hwaseong-si, Gyeonggi-do (KR)
(74) Representative: Isarpatent

(57) **Abstract**

The present disclosure relates to an apparatus for controlling a vehicle and a method thereof. The vehicle control apparatus may obtain, based on a point cloud obtained via a LiDAR, contour points corresponding to an object external to a vehicle, determine, based on the contour points, a loss distribution according to at least one angle representing a direction, determine, based on new angles in a first range of angles that is associated with a minimum loss value in the loss distribution, a second range of angles that is included in the first range of angles, determine a virtual box corresponding to the object by determining, based on a difference between the minimum loss value and angles within the second range of angles being within a threshold value, a heading direction of the virtual box, and control, based on the virtual box, an autonomous driving operation of the vehicle.

## Description

### TECHNICAL FIELD

The present disclosure relates to a vehicle control apparatus and a method thereof, and more particularly, relates to a technology for using light detection and ranging (LiDAR).

### BACKGROUND

Various studies for identifying an external object by using various sensors are being conducted to improve driving assistance for vehicles.

In particular, while operating in a driving assistance mode or an autonomous driving mode, a vehicle may identify the external object by using a LiDAR.

If the vehicle identifies the external object through the LiDAR, the heading direction of a virtual box, which indicates the traveling direction of the external object identified by the LiDAR, may be incorrectly identified. Accordingly, various studies are being conducted to solve the issues.

### SUMMARY

The present disclosure was made to solve the above-mentioned problems occurring in the prior art while advantages achieved by the prior art are maintained intact.

An aspect of the present disclosure provides a vehicle control apparatus for determining a heading direction of a virtual box corresponding to an external object, and a method thereof.

An aspect of the present disclosure provides a vehicle control apparatus for improving the driving stability of a driving assistance mode and/or an autonomous driving mode of a vehicle by determining the heading direction of the virtual box corresponding to the external object, and a method thereof.

An aspect of the present disclosure provides a vehicle control apparatus for improving the driving stability of a driving assistance mode and/or an autonomous driving mode of the vehicle by accurately outputting the heading direction of the virtual box corresponding to the external object, and a method thereof.

The technical problems to be solved by the present disclosure are not limited to the aforementioned problems, and any other technical problems not mentioned herein will be clearly understood from the following description by those skilled in the art to which the present disclosure pertains.

According to one or more example embodiments of the present disclosure, a vehicle control apparatus may include a light detection and ranging device (LiDAR) and a processor. The processor may be configured to: obtain, based on a point cloud obtained via the LiDAR, contour points corresponding to an object external to a vehicle; determine, based on the contour points, a loss distribution according to at least one angle representing a direction; determine, based on new angles in a first range of angles that is associated with a minimum loss value in the loss distribution, a second range of angles that is included in the first range of angles; determine a virtual box corresponding to the object by determining, based on a difference between the minimum loss value and angles within the second range of angles being within a threshold value, a heading direction of the virtual box; and control, based on the virtual box, an autonomous driving operation of the vehicle.

The processor may be configured to obtain the contour points by: obtaining the contour points based on an angle between two points, which are adjacent to each other in the point cloud, and based on a designated axis on a designated plane.

The processor may be further configured to: determine the first range of angles based on angle values, of a predetermined quantity, which are adjacent to the minimum loss value.

The processor may be further configured to: determine the first range of angles based on identifying the minimum loss value in each of predetermined ranges of angles.

The processor may be further configured to: determine the new angles based on dividing the first range of angles by a predetermined quantity.

The processor may be further configured to: determine, based on dividing the second range of angles by the predetermined quantity, a third range of angles that is included in the second range of angles.

The processor may be configured to determine the heading direction of the virtual box by: comparing a difference between a first loss rate obtained by first angles included in the first range of angles and a second loss rate obtained by second angles included in the second range of angles; and determining, further based on a rate at which the second loss rate decreases compared to the first loss rate being less than a threshold reduction rate, the heading direction of the virtual box.

The processor may be configured to determine the virtual box by: determining the virtual box further based on a maximum value of a z-axis direction, a minimum value of the z-axis direction, and the heading direction among coordinate values of points included in the point cloud.

The processor may be configured to obtain the contour points by: obtaining the contour points further based on at least one of: an object contour algorithm, a convex-hull algorithm, or an outer point sampling algorithm.

The processor may be configured to determine the loss distribution by determining the loss distribution further based on at least one of: a width of a bounding box generated by the contour points, a distance between the bounding box and the contour points, a variance between the bounding box and the contour points, a principle component analysis (PCA) algorithm, or a random sample consensus (RANSAC) algorithm.

According to one or more example embodiments of the present disclosure, a method performed by an apparatus of a vehicle may include: obtaining, based on a point cloud obtained via a light detection and ranging device (LiDAR), contour points corresponding to an object external to the vehicle; determining, based on the contour points, a loss distribution according to at least one angle representing a direction; determining, based on new angles in a first range of angles that is associated with a minimum loss value in the loss distribution, a second range of angles that is included in the first range of angles; determining a virtual box corresponding to the object by determining, based on a difference between the minimum loss value and angles within the second range of angles being within a threshold value, a heading direction of the virtual box; and controlling, based on the virtual box, an autonomous driving operation of the vehicle.

Obtaining the contour points may include: obtaining the contour points based on an angle between two points, which are adjacent to each other in the point cloud, and based on a designated axis on a designated plane.

The method may further include: determining the first range of angles based on angle values, of a predetermined quantity, which are adjacent to the minimum loss value.

The method may further include: determining the first range of angles based on identifying the minimum loss value in each of predetermined ranges of angles.

The method may further include: determining the new angles based on dividing the first range of angles by a predetermined quantity.

The method may further include: determining, based on dividing the second range of angles by the predetermined quantity, a third range of angles that is included in the second range of angles.

Determining the heading direction of the virtual box may include: comparing a difference between a first loss rate obtained by first angles included in the first range of angles and a second loss rate obtained by second angles included in the second range of angles; and determining, further based on a rate at which the second loss rate decreases compared to the first loss rate being less than a threshold reduction rate, the heading direction of the virtual box.

Determining the virtual box may include: determining the virtual box further based on a maximum value of a z-axis direction, a minimum value of the z-axis direction, and the heading direction among coordinate values of points included in the point cloud.

Obtaining the contour points may include obtaining the contour points further based on at least one of: an object contour algorithm, a convex-hull algorithm, or an outer point sampling algorithm.

Determining the loss distribution may include: determining the loss distribution further based on at least one of a width of a bounding box generated by the contour points, a distance between the bounding box and the contour points, a variance between the bounding box and the contour points, a principle component analysis (PCA) algorithm, or a random sample consensus (RANSAC) algorithm.

### BRIEF DESCRIPTION OF THE DRAWINGS

The above and other objects, features and advantages of the present disclosure will be more apparent from the following detailed description taken in conjunction with the accompanying drawings:
FIG. 1 shows an example of a block diagram associated with a vehicle control apparatus;
FIG. 2 shows an example of a flowchart associated with a vehicle control method;
FIG. 3 shows an example of generating a virtual box;
FIG. 4 shows an example of identifying points within an interest angle section;
FIG. 5 shows an example of identifying an angle for determining a heading direction of a virtual box;
FIG. 6 illustrates an example of identifying an interest angle section in at least part of a designated angle section;
FIG. 7 shows an example of a flowchart associated with a vehicle control method; and
FIG. 8 shows a computing system associated with a vehicle control apparatus or vehicle control method.

### DETAILED DESCRIPTION

Hereinafter, one or more example embodiments of the present disclosure will be described in detail with reference to the accompanying drawings. In adding reference numerals to components of each drawing, it should be noted that the same components include the same reference numerals, although they are indicated on another drawing. Furthermore, in describing the example embodiments of the present disclosure, detailed descriptions associated with well-known functions or configurations will be omitted if they may make subject matters of the present disclosure unnecessarily obscure.

In describing elements of one or more example embodiments of the present disclosure, the terms first, second, A, B, (a), (b), and the like may be used herein. These terms are only used to distinguish one element from another element, but do not limit the corresponding elements irrespective of the nature, order, or priority of the corresponding elements. Furthermore, unless otherwise defined, all terms including technical and scientific terms used herein are to be interpreted as is customary in the art to which the present disclosure belongs. It will be understood that terms used herein should be interpreted as including a meaning that is consistent with their meaning in the context of the present disclosure and the relevant art and will not be interpreted in an idealized or overly formal sense unless expressly so defined herein.

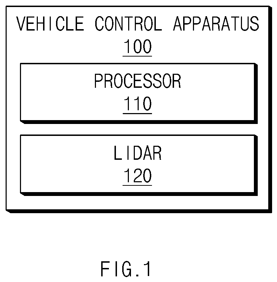

Hereinafter, one or more example embodiments of the present disclosure will be described in detail with reference to FIGS. 1 to 8.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

### {update the highlighted field in the context of specification}

Based on one or more features (e.g., virtual box corresponding to an external object) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., virtual box corresponding to an external object) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., virtual box corresponding to an external object) described herein.

Minimum risk maneuver (MRM) operation (s) may also be controlled, for example, based on one or more features (e.g., virtual box corresponding to an external object) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., virtual box corresponding to an external object) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may include an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., virtual box corresponding to an external object) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

FIG. 1 shows an example of a block diagram associated with a vehicle control apparatus.

Referring to FIG. 1, a vehicle control apparatus 100 may be implemented inside or outside a vehicle, and some of components included in the vehicle control apparatus 100 may be implemented inside or outside the vehicle. At this time, the vehicle control apparatus 100 may be integrated with internal control units of a vehicle and may be implemented with a separate device so as to be coupled with control units of the vehicle by means of a separate connection means. For example, the vehicle control apparatus 100 may further include components not shown in FIG. 1.

The vehicle control apparatus 100 may include a processor 110 and a LiDAR 120. The processor 110 and the LiDAR 120 may be electronically and/or operably coupled with each other by an electronical component including a communication bus.

Hereinafter, the fact that pieces of hardware are coupled operably may include the fact that a direct and/or indirect connection between the pieces of hardware is established by wired and/or wirelessly such that second hardware is controlled by first hardware among the pieces of hardware.

Although different blocks are shown, the present disclosure is not limited thereto. Some of the pieces of hardware in FIG. 1 may be included in a single integrated circuit including a system on a chip (SoC). The type and/or number of hardware included in the vehicle control apparatus 100 is not limited to that shown in FIG. 1. For example, the vehicle control apparatus 100 may include only some of the pieces of hardware shown in FIG. 1.

The vehicle control apparatus 100 may include hardware for processing data based on one or more instructions. The hardware for processing data may include the processor 110.

For example, the hardware for processing data may include an arithmetic and logic unit (ALU), a floating point unit (FPU), a field programmable gate array (FPGA), a central processing unit (CPU), and/or an application processor (AP). The processor 110 may include a structure of a single-core processor, or may include a structure of a multi-core processor including a dual core, a quad core, a hexa core, or an octa core.

For example, the LiDAR 120 may obtain data sets obtained by identifying objects surrounding the vehicle control apparatus 100 (or a vehicle including the vehicle control apparatus 100). For example, the LiDAR 120 may identify at least one of a location of the surrounding object, a movement direction of the surrounding object, or the speed of the surrounding object, or any combination thereof based on a pulse laser signal emitted from the LiDAR 120 being reflected and returned by the surrounding object.

The processor 110 included in the vehicle control apparatus 100 may obtain a point cloud through the LiDAR 120. For example, the processor 110 may obtain a point cloud based on the pulse laser signal emitted from the LiDAR 120. For example, the point cloud may mean a set of points corresponding to an external object.

For example, the processor 110 may apply a first algorithm to the point cloud obtained through the LiDAR 120. For example, the first algorithm may include at least one of an object contour algorithm, a convex-hull algorithm, or an outer point sampling algorithm, or any combination thereof.

For example, the processor 110 may obtain contour points corresponding to the outline of the external object based on applying the first algorithm to the point cloud.

For example, the processor may obtain the contour points that represent the outline of the external object.

For example, the processor 110 may obtain the contour points based on an angle between two points, which are adjacent to each other in the point cloud, and a designated axis on a designated plane. For example, the designated plane may include an x-y plane of a vehicle coordinate system. For example, the designated axis may include an x-axis and/or a y-axis of the vehicle coordinate system. However, the present disclosure is not limited thereto.

For example, the processor may determine the corresponding points as an initial angle candidate group based on the angle between two adjacent points and the designated axis satisfying a designated condition.

The processor 110 may apply a second algorithm to the contour points.

For example, the second algorithm may include at least one of a width of a bounding box generated by the contour points, a distance between the bounding box and the contour points, a variance between the bounding box and the contour points, a principle component analysis (PCA) algorithm, or a random sample consensus (RANSAC) algorithm, or any combination thereof.

For example, the processor 110 may obtain a loss distribution according to the at least one angle representing a heading direction based on applying the second algorithm to the contour points.

For example, the at least one angle representing the heading direction may mean an angle between the x-axis of the vehicle coordinate system and the heading direction.

The processor 110 may determine a first angle section of interest by using a minimum value with the smallest loss in a loss distribution. An angle section may also be referred to as a range of angles.

For example, the processor 110 may determine the first interest angle section based on angle values of the first designated number (e.g., a predetermined quantity), which are adjacent to the minimum value. For example, the first designated number may be set by a user. For example, the processor 110 may determine the first interest angle section based on the angle values of the first designated number set by the user.

For example, the processor 110 may identify angle values corresponding to half the first designated number in front of the minimum value with the smallest loss. For example, the processor 110 may identify angle values corresponding to half the first designated numbers behind the minimum value with the smallest loss. The processor 110 may determine the first interest angle section including the identified angle values by identifying the angle values corresponding to the first designated number before and after the minimum value.

The processor 110 may identify the minimum value in each of predetermined sections. For example, the processor 110 may identify a first minimum value in a first predetermined section. For example, the processor 110 may identify a second minimum value in a second predetermined section. For example, the processor 110 may determine the first interest angle section by using the first minimum value based on identifying the first minimum value in the first predetermined section. For example, the processor 110 may determine the first interest angle section by using the second minimum value based on identifying the second minimum value in the second predetermined section. For example, the processor 110 may determine two first interest angle sections in two predetermined sections by determining the first interest angle section based on the first minimum value identified in the first predetermined section, and determining the first interest angle section based on the second minimum value identified in the second predetermined section.

For example, the processor 110 may obtain a second interest angle section included in the first interest angle section based on the new angles included in the first interest angle section, which is determined by using the minimum value with the smallest loss in the loss distribution.

For example, the processor 110 may divide the first interest angle section by the second designated number (e.g., a predetermined quantity). For example, the processor 110 may determine new angles corresponding to a divided point based on dividing the first interest angle section by the second designated number. For example, a process of determining the new angles may use intermediate values described below.

For example, the processor 110 may add new angles within the first interest angle section. For example, the processor 110 may identify a first intermediate value between the minimum value and a first value identified in front of the minimum value. For example, the processor 110 may identify a second intermediate value between the minimum value and a second value identified behind the minimum value.

For example, the processor may obtain a second interest angle section where the first intermediate value is the minimum of a section and the second intermediate value is the maximum of the section.

The processor 110 may obtain a third interest angle section included in a second interest angle section based on dividing the second interest angle section by the second designated number. For example, the processor 110 may obtain the third interest angle section by re-dividing the second interest angle section by using an intermediate value between values included in the second interest angle section.

The processor 110 may determine whether a difference between the minimum value and angles within a designated range from the minimum value within the second interest angle section is within a threshold value.

For example, the processor 110 may determine a heading direction of a virtual box corresponding to an external object based on the difference between the minimum value and the angles within the designated range from the minimum value within the second interest angle section being within a threshold value. For example, the processor 110 may generate a virtual box with the determined heading direction and may output the generated virtual box.

For example, the processor 110 may obtain a first loss rate based on the first angles included in the first interest angle section. For example, the processor 110 may obtain a second loss rate based on the second angles included in the second interest angle section.

For example, the processor 110 may compare a difference between the first loss rate obtained by the first angles included in the first interest angle section and the second loss rate obtained by the second angles included in the second interest angle section.

The processor 110 may identify a rate at which the second loss rate decreases compared to the first loss rate. For example, the processor 110 may determine whether a rate, at which the second loss rate decreases compared to the first loss rate, decreases to be smaller than a threshold reduction rate. For example, the threshold reduction rate may be set by a user.

For example, the processor 110 may determine the heading direction of the virtual box based on the rate, at which the second loss rate decreases compared to the first loss rate, being smaller than the threshold reduction rate. For example, the processor 110 may identify that the rate, at which the second loss rate decreases compared to the first loss rate is smaller than the threshold reduction rate, and may determine the heading direction of the virtual box by using an interest angle section where the second loss rate occurs.

The processor 110 may generate a virtual box based on determining the heading direction of the virtual box. For example, the processor 110 may determine the size of the virtual box based on identifying the coordinate values of points included in the point cloud.

For example, the processor 110 may identify the coordinate values of the points included in the point cloud. For example, the processor 110 may identify at least one of a minimum value in an x-axis direction, a maximum value in the x-axis direction, a minimum value in a y-axis direction, a maximum value in the y-axis direction, a minimum value in a z-axis direction, or a maximum value in the z-axis direction, or any combination thereof from among the coordinate values included in the point cloud. For example, the processor 110 may determine the height of the virtual box based on the maximum value in the z-axis direction and the minimum value in the z-axis direction among the coordinate values included in the point cloud. For example, the processor 110 may determine the height of the virtual box based on the maximum value in the z-axis direction and the minimum value in the z-axis direction among the coordinate values included in the point cloud and may generate the virtual box by using the heading direction.

The processor 110 may output the generated virtual box. For example, the processor 110 may output the generated virtual box to utilize the generated virtual box in an autonomous driving mode and/or a driving assistance mode of a vehicle. For example, the processor 110 may set a driving route for the vehicle or may control the speed of the vehicle by using the generated virtual box.

As described above, the processor 110 of the vehicle control apparatus 100 may accurately identify the heading direction of the virtual box, thereby generating and controlling a safe route while the vehicle is operating in the autonomous driving mode.

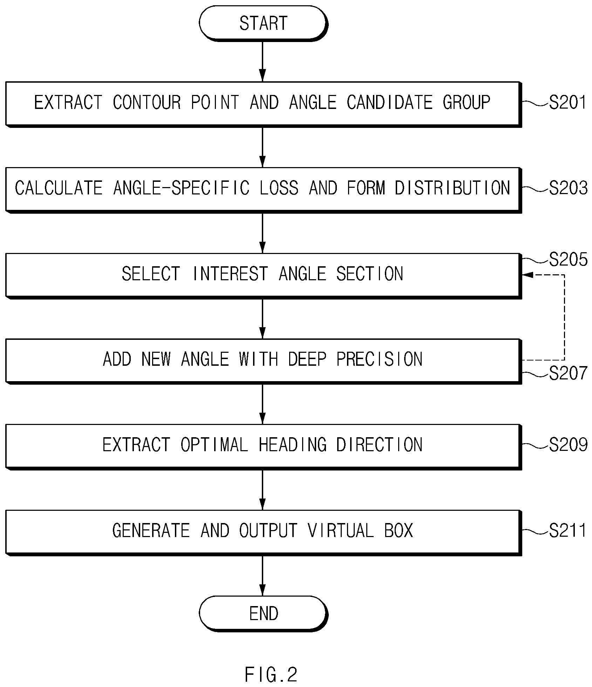

FIG. 2 shows an example of a flowchart associated with a vehicle control method.

Hereinafter, it is assumed that the vehicle control apparatus 100 of FIG. 1 performs the process of FIG. 2. In addition, in a description of FIG. 2, it may be understood that an operation described as being performed by an apparatus is controlled by the processor 110 of the vehicle control apparatus 100.

At least one of operations of FIG. 2 may be performed by the vehicle control apparatus 100 of FIG. 1. At least one of operations of FIG. 2 may be performed by the processor 110 of FIG. 1. Each of the operations in FIG. 2 may be performed sequentially, but is not necessarily sequentially performed. For example, the order of operations may be changed, and at least two operations may be performed in parallel.

Referring to FIG. 2, in S201, a vehicle control method may include an operation of extracting a contour point and an angle candidate group.

For example, the vehicle control method may include an operation of extracting contour points corresponding to an external object from a point cloud. For example, the vehicle control method may include an operation of extracting the contour points corresponding to the external object from the point cloud based on at least one of an object contour algorithm, a convex-hull algorithm, or outer point sampling, or any combination thereof.

For example, the vehicle control method may include an operation of obtaining an initial angle candidate group including at least part of the contour points. For example, the contour points included in the initial angle candidate group may include points where two consecutive contour points form a designated axis and a designated slope.

In S203, the vehicle control method may include an operation of calculating an angle-specific loss and forming a distribution.

For example, the vehicle control method may include an operation of calculating a loss corresponding to a specific angle in an initial angle candidate group. For example, the vehicle control method may include an operation of obtaining the angle-specific loss based on at least one of a width of a box generated by using a specific angle, a distance between a contour point and the box generated by using the specific angle, a variance between the contour point and the box generated by using the specific angle, a PCA algorithm, or a RANSAC algorithm, or any combination thereof.

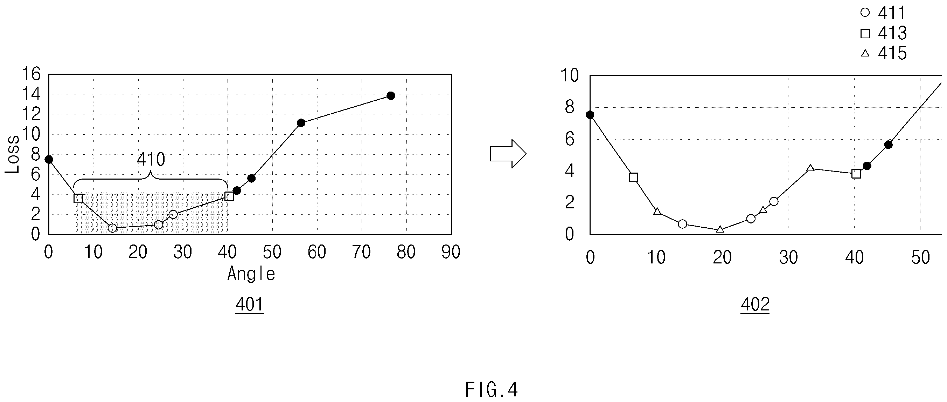

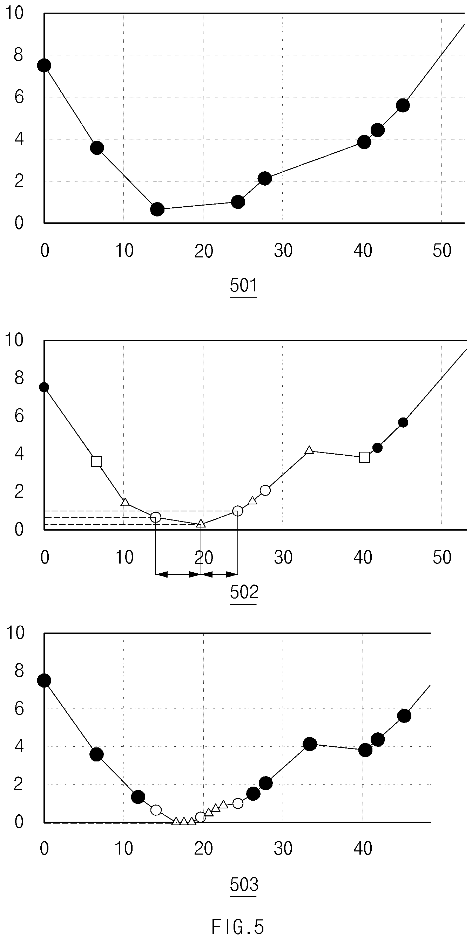

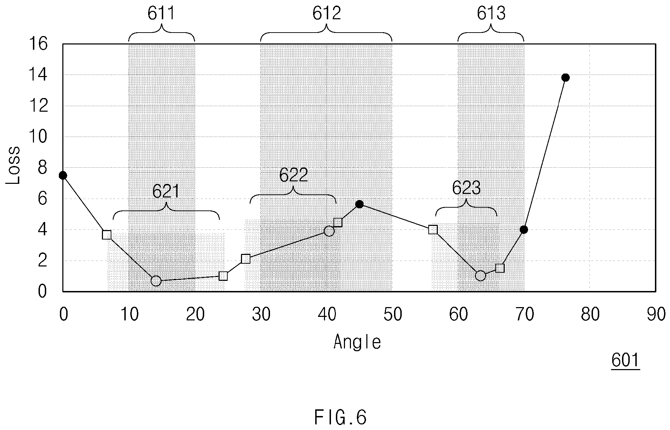

For example, the vehicle control method may include an operation of obtaining a graph representing a loss distribution based on obtaining the angle-specific loss. For example, the graph representing the loss distribution may include graphs of FIG. 4, graphs of FIG. 5, and/or graphs of FIG. 6.

In S205, the vehicle control method may include an operation of selecting an interest angle section.

For example, the vehicle control method may include an operation of identifying the minimum value with the smallest loss in the graph representing the loss distribution. For example, the vehicle control method may include an operation of selecting the interest angle section in the graph representing the loss distribution.

For example, the vehicle control method may include an operation of selecting the interest angle section on the basis of the minimum value, based on identifying the minimum value in the graph representing the loss distribution. For example, the vehicle control method may include an operation of selecting the interest angle section based on the minimum value by using the minimum value and a first parameter. For example, the first parameter may be referred to as a "banding parameter".

The vehicle control method may include an operation of selecting the interest angle section by using the minimum value with the smallest loss within a specific angle range specified by a user.

For example, the vehicle control method may include an operation of identifying a first minimum value within a first specific angle range specified by the user. For example, the vehicle control method may include an operation of identifying a second minimum value within a second specific angle range specified by the user.

For example, the vehicle control method may include an operation of determining a first interest angle section by using the first minimum value included within the first specific angle range. For example, the vehicle control method may include an operation of determining a second interest angle section by using the second minimum value included within the second specific angle range. For example, the vehicle control method may include an operation of adding a new angle with deep precision in the first interest angle section and the second interest angle section.

In S207, the vehicle control method may include an operation of adding a new angle with deep precision.

For example, the vehicle control method may include an operation of dividing the interest angle section by using a second parameter. For example, the second parameter may be referred to as an "adding parameter". For example, the second parameter may be set by the user.

For example, the vehicle control method may include an operation of dividing the interest angle section by the number obtained by adding the second parameter and 1. For example, the vehicle control method may include an operation of dividing an area between banding points included in the interest angle section by using the second parameter. For example, the banding points may include points for setting the interest angle section. For example, at least one of the banding points may include the minimum value with the smallest loss.

In S209, the vehicle control method may include an operation of extracting an optimal heading direction.

For example, the vehicle control method may include an operation of extracting the optimal heading direction by repeatedly performing S205 and S207.

For example, the vehicle control method may include an operation of repeatedly performing S205 and S207 until a termination condition is satisfied.

For example, the termination condition may include i) a case where the repetition of S205 and S207 is completed as many as the set number of times (a first condition), ii) a case where the set angle resolution is reached (a second condition), and/or iii) a case where a loss no longer decreases (a third condition). For example, the termination condition may include the first condition, the second condition, and/or the third condition.

For example, to describe the first condition in detail, the vehicle control method may include an operation of identifying that the first condition is satisfied, based on performing S205 and S207 as many as the predetermined number of rounds. If the first condition is satisfied, the vehicle control method may include an operation of extracting the optimal heading direction.

For example, to describe the second condition in detail, the vehicle control method may include an operation of identifying a difference between `n' angle values with the smallest loss and identifying that the second condition is satisfied, based on the average of the above-mentioned differences being smaller than a predetermined threshold value. If the second condition is satisfied, the vehicle control method may include an operation of extracting the optimal heading direction.

For example, to describe the third condition in detail, the vehicle control method may include an operation of calculating the average loss of 'n' angles with the smallest loss for an initial angle candidate group, an operation of calculating the average loss of 'n' angles with the smallest loss after adding additional banding points if each round is performed afterwards, an operation of calculating a ratio regarding how much the average loss in a current round decreases compared to the average loss in a previous round, and an operation of identifying that the third condition is satisfied, if the loss reduction rate in the current round is smaller than a predetermined threshold value. If the third condition is satisfied, the vehicle control method may include an operation of extracting the optimal heading direction. At least one of the first condition, the second condition, or the third condition described above may be included in the termination condition.

In S211, the vehicle control method may include an operation of generating and outputting a virtual box.

For example, the vehicle control method may include an operation of generating the virtual box. For example, the vehicle control method may include an operation of generating the virtual box by using the extracted heading direction, based on extracting the heading direction.

For example, the vehicle control method may include an operation of generating the virtual box with the extracted heading direction. For example, the vehicle control method may include an operation of generating the virtual box with the extracted heading direction by expanding the dimension of a 2D bounding box by using a z-axis minimum value and a z-axis maximum value among coordinate values identified in the point cloud

For example, the vehicle control method may include an operation of outputting the generated virtual box.

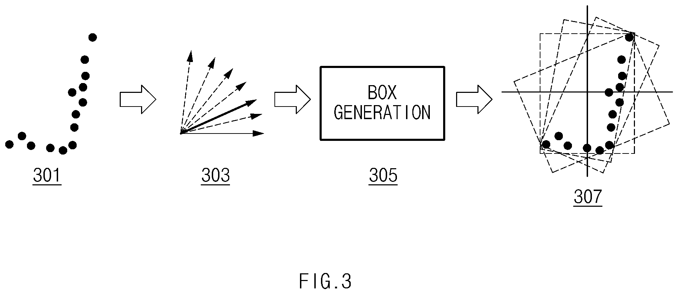

FIG. 3 shows an example of generating a virtual box.

Referring to FIG. 3, a processor (e.g., the processor 110 of FIG. 1) of a vehicle control apparatus (e.g., the vehicle control apparatus 100 of FIG. 1) may obtain a point cloud 301 through a LiDAR (e.g., the LiDAR 120 in FIG. 1).

The processor may identify a reference point in the point cloud 301. For example, the processor may determine various angles 303 (or various directions) based on the reference point of the point cloud 301.

For example, the processor may generate a plurality of virtual boxes corresponding to each angle, based on the various angles 303.

For example, the processor may generate virtual boxes 307 with heading directions according to the various angles 303 by using a box generation algorithm 305.

For example, the box generation algorithm 305 may include an algorithm that generates a bounding box by using the input angle.

For example, the processor may generate the virtual box described in FIG. 1 by using the box generation algorithm 305.

FIG. 4 shows an example of identifying points within an interest angle section.

Referring to FIG. 4, a processor (e.g., the processor 110 in FIG. 1) of a vehicle control apparatus (e.g., the vehicle control apparatus 100 in FIG. 1) may obtain a graph expressing a loss according to at least one angle representing a heading direction, based on applying a designated algorithm to a point cloud.

A first example 401 and/or a second example 402 in FIG. 4 may include a graph expressing a loss according to at least one angle representing the heading direction. For example, the graph expressing the loss according to the at least one angle representing the heading direction may include a loss distribution.

For example, the processor may determine an interest angle section 410 in the graph expressing the loss according to at least one angle representing the heading direction. For example, the processor may determine the interest angle section 410 under a designated condition.

For example, the processor may identify a minimum value in the graph. For example, the processor may determine the interest angle section 410 based on the set number of values before and after the minimum value.

For example, in the first example 401, first points 411 may mean the set number of values including the minimum value. For example, in the first example 401, second points 413 may mean banding points.

For example, the processor may divide the interest angle section 410 under a set condition. For example, if dividing the interest angle section 410, the processor may divide the interest angle section 410 by placing third points 415 between at least two of the first points 411 and the second points 413.

For example, the third points 415 may include locations for dividing points (e.g., the first points 411 and/or the second points 413) in half.

The processor may obtain a new interest angle section included in the interest angle section 410 by dividing the interest angle section 410 based on obtaining the third points 415. The processor may determine the heading direction of a virtual box, based on the new interest angle section.

FIG. 5 shows an example of identifying an angle for determining a heading direction of a virtual box.

Referring to FIG. 5, a processor (e.g., the processor 110 of FIG. 1) of a vehicle control apparatus (e.g., the vehicle control apparatus 100 of FIG. 1) may obtain graphs included in first to third examples 501 to 503 based on a point cloud. For example, the graphs included in the first to third examples 501 to 503 may include a graph for determining a heading direction of a virtual box.

For example, the processor may obtain a first graph expressing a loss according to at least one angle representing the heading direction, based on obtaining the point cloud. For example, the first graph may be referred to as the first example 501.

For example, in the first example 501, the processor may identify an average angle difference between points. For example, the processor may identify the average loss based on identifying the average angle difference between points. For example, in the first example 501, the average angle difference between the minimum value and points on both sides may be about 6.85, and the average loss may be about 1.236.

Referring to the second example 502, the processor may determine portion points for dividing an area between points. For example, the portion points may include points for dividing points in half. The processor may identify at least one of the average angle difference between the portion points and the minimum value, an average loss, or a reduction rate of the currently obtained average loss to the previously obtained average loss, or any combination thereof. In the second example 502, the average angle difference between the portion points and the minimum value may be about 5.15, and the average loss may be about 0.623. For example, in the second example 502, the reduction rate of the currently obtained average loss to the previously obtained average loss may be "0.623/1.236" (i.e., 50.4%).

For example, the processor may determine whether the reduction rate is smaller than a threshold value. For example, the processor may divide areas between portion points and minimum values, based on the reduction rate being greater than or equal to the threshold value. For example, if dividing areas between portion points and minimum values, the processor may obtain a graph such as the third example 503. It may be assumed that the threshold value is 30%.

For example, the processor may obtain at least one of an average angle difference between portion points and minimum values, an average loss, or a reduction rate, or any combination thereof based on obtaining a graph such as the third example 503.

For example, in the third example 503, the average angle difference between the portion points and the minimum value may be about 0.92, and the average loss may be about 0.170. For example, in the third example 503, the reduction rate of the currently obtained average loss to the previously obtained average loss may be "0.170/0.623" (i.e., 27.3%).

Accordingly, the processor may determine that the reduction rate is smaller than the threshold value. The processor may determine the heading direction of the virtual box on the basis of the corresponding range, based on the reduction rate being smaller than 30%.

The processor may generate a virtual box based on the determined heading direction. For example, the processor may generate the virtual box by using the height of the point cloud and the determined heading direction and may output the generated virtual box.

FIG. 6 illustrates an example of identifying an interest angle section in at least part of a designated angle section.

Referring to FIG. 6, a processor (e.g., the processor 110 in FIG. 1) of a vehicle control apparatus (e.g., the vehicle control apparatus 100 in FIG. 1) may obtain a loss distribution based on a point cloud. For example, the loss distribution may be expressed as a graph 601.

The processor may determine the designated angle sections 611, 612, and 613 by a user within the loss distribution. For example, the designated angle sections 611, 612, and 613 may be set by a user or may be designated in advance.

For example, the processor may identify minimum values in each of the first designated angle section 611, the second designated angle section 612, and the third designated angle section 613. For example, the processor may identify a first minimum value in the first designated angle section 611. For example, the processor may identify a second minimum value in the second designated angle section 612. For example, the processor may identify a third minimum value in the third designated angle section 613.

The processor may determine a first interest angle section 621 on the basis of the first minimum value based on identifying the first minimum value in the first designated angle section 611. The processor may determine a second interest angle section 622 on the basis of the second minimum value based on identifying the second minimum value in the second designated angle section 612. The processor may determine a third interest angle section 623 on the basis of the third minimum value based on identifying the third minimum value in the third designated angle section 613.

For example, the processor may obtain portion interest angle sections by performing a designated algorithm on a plurality of interest angle sections. For example, the portion interest angle sections may be included within each of interest angle sections.

The processor may determine the heading direction of the virtual box by repeatedly performing the process described above. The processor may generate a virtual box with the determined heading direction and may output the generated virtual box.

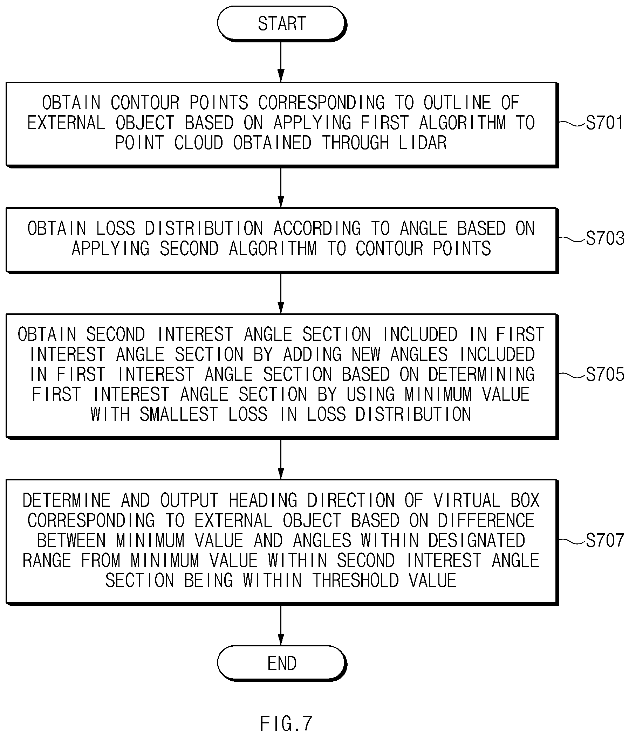

FIG. 7 shows an example of a flowchart associated with a vehicle control method.

Hereinafter, it is assumed that the vehicle control apparatus 100 of FIG. 1 performs the process of FIG. 7. In addition, in a description of FIG. 7, it may be understood that an operation described as being performed by an apparatus is controlled by the processor 110 of the vehicle control apparatus 100.

At least one of operations of FIG. 7 may be performed by the vehicle control apparatus 100 of FIG. 1. At least one of operations of FIG. 7 may be performed by the processor 110 of FIG. 1. Each of the operations in FIG. 7 may be performed sequentially, but is not necessarily sequentially performed. For example, the order of operations may be changed, and at least two operations may be performed in parallel.

Referring to FIG. 7, in S701, a vehicle control method may include an operation of obtaining contour points corresponding to the outline of an external object based on applying a first algorithm to a point cloud obtained through a LiDAR.

For example, the vehicle control method may include an operation of obtaining the contour points based on an angle between two points, which are adjacent to each other in a point cloud, and a designated axis on a designated plane.

For example, the first algorithm may include at least one of an object contour algorithm, a convex-hull algorithm, or an outer point sampling algorithm, or any combination thereof.

In S703, the vehicle control method may include an operation of obtaining a loss distribution according to the at least one angle representing a heading direction based on applying a second algorithm to the contour points.

For example, the second algorithm may include at least one of a width of a bounding box generated by the contour points, a distance between the bounding box and the contour points, a variance between the bounding box and the contour points, a PCA algorithm, or a RANSAC algorithm, or any combination thereof.

In S705, the vehicle control method may include an operation of obtaining a second interest angle section included in a first interest angle section based on new angles included in the first interest angle section, which is determined by using the minimum value with the smallest loss in the loss distribution.

For example, the vehicle control method may include an operation of determining the first interest angle section based on angle values of the first designated number (e.g., a predetermined quantity), which are adjacent to the minimum value.

For example, the vehicle control method may include an operation of determining the first interest angle section based on identifying the minimum value in each of predetermined sections. For example, the vehicle control method may include an operation of determining the first interest angle section based on each of minimum values in each of predetermined sections and angle values of the first designated number.

For example, the vehicle control method may include an operation of determining the new angles corresponding to a divided point based on dividing the first interest angle section by the second designated number.

For example, the vehicle control method may include an operation of obtaining a third interest angle section included in the second interest angle section based on dividing the second interest angle section by the second designated number (e.g., a predetermined quantity). For example, the vehicle control method may include an operation of obtaining the third interest angle section by dividing equally values between angle values included in the second interest angle section.

In S707, the vehicle control method may include an operation of outputting a virtual box by determining a heading direction of the virtual box corresponding to the external object based on a difference between the minimum value and angles within a designated range from the minimum value within the second interest angle section being within a threshold value.

For example, the vehicle control method may include an operation of obtaining the first loss rate by the first angles included in the first interest angle section. For example, the vehicle control method may include an operation of obtaining the second loss rate by the second angles included in the second interest angle section.

For example, the vehicle control method may include an operation of comparing a difference between the first loss rate obtained by the first angles included in the first interest angle section and the second loss rate obtained by the second angles included in the second interest angle section.

For example, the vehicle control method may include an operation of identifying a rate at which the second loss rate decreases compared to the first loss rate. For example, the vehicle control method may include an operation of determining the heading direction of the virtual box based on the rate, at which the second loss rate decreases compared to the first loss rate, being smaller than the threshold reduction rate. For example, the vehicle control method may include an operation of determining the heading direction of the virtual box by using an interest angle section where the rate at which the second loss rate decreases compared to the first loss rate is smaller than a threshold reduction rate.

For example, the vehicle control method may include an operation of generating the virtual box based on a maximum value of a z-axis direction, a minimum value of the z-axis direction, and the determined heading direction among coordinate values of points included in the point cloud.

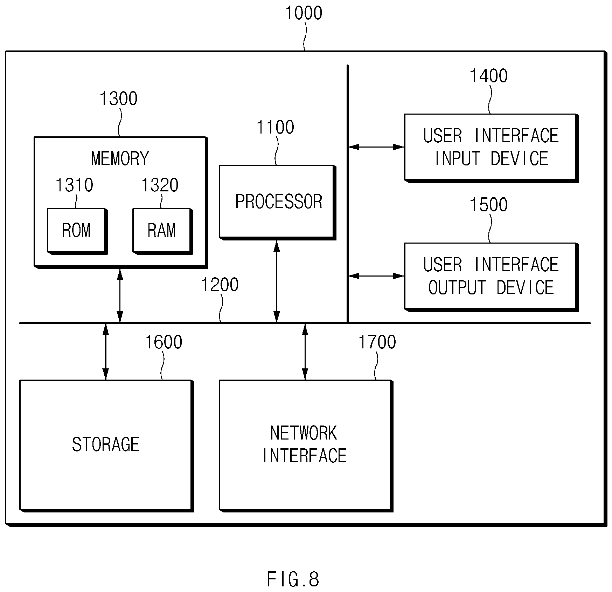

FIG. 8 shows an example of a computing system associated with a vehicle control apparatus or vehicle control method.

Referring to FIG. 8, a computing system 1000 may include at least one processor 1100, a memory 1300, a user interface input device 1400, a user interface output device 1500, storage 1600, and a network interface 1700, which are connected with each other via a bus 1200.

The processor 1100 may be a central processing device (CPU) or a semiconductor device that processes instructions stored in the memory 1300 and/or the storage 1600. The memory 1300 and the storage 1600 may include various types of volatile or non-volatile storage media. For example, the memory 1300 may include a ROM (Read Only Memory) 1310 and a RAM (Random Access Memory) 1320.

Accordingly, the processes of the method or algorithm described in the present disclosure may be implemented directly by hardware executed by the processor 1100, a software module, or a combination thereof. The software module may reside in a storage medium (that is, the memory 1300 and/or the storage 1600), such as a RAM, a flash memory, a ROM, an EPROM, an EEPROM, a register, a hard disk, solid state drive (SSD), a detachable disk, or a CD-ROM. The exemplary storage medium is coupled to the processor 1100, and the processor 1100 may read information from the storage medium and may write information in the storage medium. In another method, the storage medium may be integrated with the processor 1100. The processor 1100 and the storage medium may reside in an application specific integrated circuit (ASIC). The ASIC may reside in a user terminal. In another method, the processor 1100 and the storage medium may reside in the user terminal as an individual component.

According to an aspect of the present disclosure, a vehicle control apparatus may include a light detection and ranging (LiDAR) and a processor. The processor may obtain contour points corresponding to an outline of an external object based on applying a first algorithm to a point cloud obtained through the LiDAR, may obtain a loss distribution according to at least one angle representing a direction based on applying a second algorithm to the contour points, may obtain a second interest angle section included in a first interest angle section based on new angles included in the first interest angle section, which is determined by using a minimum value with a smallest loss in the loss distribution, and may output a virtual box by determining a heading direction of the virtual box corresponding to the external object based on a difference between the minimum value and angles within a designated range from the minimum value within the second interest angle section being within a threshold value.

In an embodiment, the processor may obtain the contour points based on an angle between two points, which are adjacent to each other in the point cloud, and a designated axis on a designated plane.

In an embodiment, the processor may determine the first interest angle section based on angle values of a first designated number, which are adjacent to the minimum value.

In an embodiment, the processor may determine the first interest angle section based on identifying the minimum value in each of predetermined sections.

In an embodiment, the processor may determine the new angles corresponding to a divided point based on dividing the first interest angle section by a second designated number.

In an embodiment, the processor may obtain a third interest angle section included in the second interest angle section based on dividing the second interest angle section by the second designated number.

In an embodiment, the processor may compare a difference between a first loss rate obtained by first angles included in the first interest angle section and a second loss rate obtained by second angles included in the second interest angle section, and may determine the heading direction of the virtual box based on a rate, at which the second loss rate decreases compared to the first loss rate being smaller than a threshold reduction rate.

In an embodiment, the processor may generate the virtual box based on a maximum value of a z-axis direction, a minimum value of the z-axis direction, and the heading direction among coordinate values of points included in the point cloud.

In an embodiment, the first algorithm may include at least one of an object contour algorithm, a convex-hull algorithm, or an outer point sampling algorithm, or any combination thereof.

In an embodiment, the second algorithm may include at least one of a width of a bounding box generated by the contour points, a distance between the bounding box and the contour points, a variance between the bounding box and the contour points, a principle component analysis (PCA) algorithm, or a random sample consensus (RANSAC) algorithm, or any combination thereof.

According to an aspect of the present disclosure, a vehicle control method may include obtaining, by a processor, contour points corresponding to an outline of an external object based on applying a first algorithm to a point cloud obtained through a LiDAR, obtaining a loss distribution according to at least one angle representing a direction based on applying a second algorithm to the contour points, obtaining a second interest angle section included in a first interest angle section based on new angles included in the first interest angle section, which is determined by using a minimum value with a smallest loss in the loss distribution, and outputting a virtual box by determining a heading direction of the virtual box corresponding to the external object based on a difference between the minimum value and angles within a designated range from the minimum value within the second interest angle section being within a threshold value.

The vehicle control method according to an embodiment may include obtaining the contour points based on an angle between two points, which are adjacent to each other in the point cloud, and a designated axis on a designated plane.

The vehicle control method according to an embodiment may include determining the first interest angle section based on angle values of a first designated number, which are adjacent to the minimum value.

The vehicle control method according to an embodiment may include determining the first interest angle section based on identifying the minimum value in each of predetermined sections.

The vehicle control method according to an embodiment may include determining the new angles corresponding to a divided point based on dividing the first interest angle section by a second designated number.

The vehicle control method according to an embodiment may include obtaining a third interest angle section included in the second interest angle section based on dividing the second interest angle section by the second designated number.

The vehicle control method according to an embodiment may include comparing a difference between a first loss rate obtained by first angles included in the first interest angle section and a second loss rate obtained by second angles included in the second interest angle section, and determining the heading direction of the virtual box based on a rate, at which the second loss rate decreases compared to the first loss rate being smaller than a threshold reduction rate.

The vehicle control method according to an embodiment may include generating the virtual box based on a maximum value of a z-axis direction, a minimum value of the z-axis direction, and the heading direction among coordinate values of points included in the point cloud.

In an embodiment, the first algorithm may include at least one of an object contour algorithm, a convex-hull algorithm, or an outer point sampling algorithm, or any combination thereof.

In an embodiment, the second algorithm may include at least one of a width of a bounding box generated by the contour points, a distance between the bounding box and the contour points, a variance between the bounding box and the contour points, a PCA algorithm, or a RANSAC algorithm, or any combination thereof.

Hereinabove, although the present disclosure has been described with reference to one or more example embodiments and the accompanying drawings, the present disclosure is not limited thereto, but may be variously modified and altered by those skilled in the art to which the present disclosure pertains without departing from the spirit and scope of the present disclosure claimed in the following claims.

Therefore, the one or more example embodiments of the present disclosure are provided to explain the spirit and scope of the present disclosure, but not to limit them, so that the spirit and scope of the present disclosure is not limited by the example embodiments. The scope of the present disclosure should be construed on the basis of the accompanying claims, and all the technical ideas within the scope equivalent to the claims should be included in the scope of the present disclosure.

The above description is merely an example of the technical idea of the present disclosure, and various modifications and modifications may be made by one skilled in the art without departing from the essential characteristic of the present disclosure.

Accordingly, one or more example embodiments of the present disclosure are not intended to limit but to explain the technical idea of the present disclosure, and the scope and spirit of the present disclosure is not limited by the above example embodiments. The scope of protection of the present disclosure should be construed by the attached claims, and all equivalents thereof should be construed as being included within the scope of the present disclosure.

The present technology may determine a heading direction of a virtual box corresponding to an external object.

Moreover, the present technology may improve the driving stability of a driving assistance mode and/or an autonomous driving mode of a vehicle by determining the heading direction of the virtual box corresponding to the external object.

Furthermore, the present technology may improve the driving stability of a driving assistance mode and/or an autonomous driving mode of the vehicle by accurately outputting the heading direction of the virtual box corresponding to the external object.

Besides, a variety of effects directly or indirectly understood through the present disclosure may be provided.

Hereinabove, although the present disclosure was described with reference to one or more example embodiments and the accompanying drawings, the present disclosure is not limited thereto, but may be variously modified and altered by those skilled in the art to which the present disclosure pertains without departing from the spirit and scope of the present disclosure claimed in the following claims.

### REPRESENTATIVE FIGURE: FIG. 1

100: VEHICLE CONTROL APPARATUS
110: PROCESSOR
120: LIDAR
301: POINT CLOUD
303: VARIOUS ANGLES
305: BOX GENERATION ALGORITHM
307: VIRTUAL BOXES
401: FIRST EXAMPLE
402: SECOND EXAMPLE
410: INTEREST ANGLE SECTION
411: FIRST POINTS
413: SECOND POINTS
415: THIRD POINTS
501: FIRST EXAMPLE
502: SECOND EXAMPLE
503: THIRD EXAMPEL
601: GRAPH
611: FIRST DESIGNATED ANGLE SECTION
612: SECOND DESIGNATED ANGLE SECTION
613: THIRD DESIGNATED ANGLE SECTION
621: FIRST INTEREST ANGLE SECTION
622: SECOND INTEREST ANGLE SECTION
623: THIRD INTEREST ANGLE SECTION
1100: PROCESSOR
1300: MEMORY
1400: USER INTERFACE INPUT DEVICE
1500: USER INTERFACE OUTPUT DEVICE
1600: STORAGE
1700: NETWORK INTERFACE

## Claims

1. A vehicle control apparatus comprising:
a light detection and ranging device (LiDAR); and
a processor configured to:
obtain, based on a point cloud obtained via the LiDAR, contour points corresponding to an object external to a vehicle;
determine, based on the contour points, a loss distribution according to at least one angle representing a direction;
determine, based on new angles in a first range of angles that is associated with a minimum loss value in the loss distribution, a second range of angles that is included in the first range of angles;
determine a virtual box corresponding to the object by determining, based on a difference between the minimum loss value and angles within the second range of angles being within a threshold value, a heading direction of the virtual box; and
control, based on the virtual box, an autonomous driving operation of the vehicle.

2. The vehicle control apparatus of claim 1, wherein the processor is configured to obtain the contour points by:
obtaining the contour points based on an angle between two points, which are adjacent to each other in the point cloud, and based on a designated axis on a designated plane.

3. The vehicle control apparatus of claim 1, wherein the processor is further configured to:
determine the first range of angles based on angle values, of a predetermined quantity, which are adjacent to the minimum loss value.

4. The vehicle control apparatus of claim 1, wherein the processor is further configured to:
determine the first range of angles based on identifying the minimum loss value in each of predetermined ranges of angles.

5. The vehicle control apparatus of claim 1, wherein the processor is further configured to:
determine the new angles based on dividing the first range of angles by a predetermined quantity.

6. The vehicle control apparatus of claim 5, wherein the processor is further configured to:
determine, based on dividing the second range of angles by the predetermined quantity, a third range of angles that is included in the second range of angles.

7. The vehicle control apparatus of claim 1, wherein the processor is configured to determine the heading direction of the virtual box by:
comparing a difference between a first loss rate obtained by first angles included in the first range of angles and a second loss rate obtained by second angles included in the second range of angles; and
determining, further based on a rate at which the second loss rate decreases compared to the first loss rate being less than a threshold reduction rate, the heading direction of the virtual box.

8. The vehicle control apparatus of claim 1, wherein the processor is configured to determine the virtual box by:
determining the virtual box further based on a maximum value of a z-axis direction, a minimum value of the z-axis direction, and the heading direction among coordinate values of points included in the point cloud.

9. The vehicle control apparatus of claim 1, wherein the processor is configured to obtain the contour points by:
obtaining the contour points further based on at least one of: an object contour algorithm, a convex-hull algorithm, or an outer point sampling algorithm.

10. The vehicle control apparatus of claim 1, wherein the processor is configured to determine the loss distribution by:
determining the loss distribution further based on at least one of: a width of a bounding box generated by the contour points, a distance between the bounding box and the contour points, a variance between the bounding box and the contour points, a principle component analysis (PCA) algorithm, or a random sample consensus (RANSAC) algorithm.

11. A method performed by an apparatus of a vehicle, the method comprising:
obtaining, based on a point cloud obtained via a light detection and ranging device (LiDAR), contour points corresponding to an object external to the vehicle;
determining, based on the contour points, a loss distribution according to at least one angle representing a direction;
determining, based on new angles in a first range of angles that is associated with a minimum loss value in the loss distribution, a second range of angles that is included in the first range of angles;
determining a virtual box corresponding to the object by determining, based on a difference between the minimum loss value and angles within the second range of angles being within a threshold value, a heading direction of the virtual box; and
controlling, based on the virtual box, an autonomous driving operation of the vehicle.

12. The method of claim 11, wherein the obtaining of the contour points comprises:
obtaining the contour points based on an angle between two points, which are adjacent to each other in the point cloud, and based on a designated axis on a designated plane.

13. The method of claim 11, further comprising:
determining the first range of angles based on angle values, of a predetermined quantity, which are adjacent to the minimum loss value.

14. The method of claim 11, further comprising:
determining the first range of angles based on identifying the minimum loss value in each of predetermined ranges of angles.

15. The method of claim 11, further comprising:
determining the new angles based on dividing the first range of angles by a predetermined quantity.
